# EUROPÄISCHE PATENTSCHRIFT

(11) **EP 2 487 055 B1**
(45) Veröffentlichungstag und Bekanntmachung des Hinweises auf die Patenterteilung: **20.04.2016**
(21) Anmeldenummer: 12154397.9
(22) Anmeldetag: 08.02.2012
(51) Int. Cl.: B60D 1/48, B60D 1/56, B60D 1/24

(54) **Stoßfängeranordnung mit Abschleppvorrichtung**
Bumper system with towing device
Agencement de pare-chocs doté d'un dispositif de remorquage

(30) Priorität: 09.02.2011 DE 102011010798
(43) Veröffentlichungstag der Anmeldung: 15.08.2012
(73) Patentinhaber: Benteler Automobiltechnik GmbH, 33102 Paderborn (DE)
(72) Erfinder: Lütke-Bexten, Ulrich, 33104 Paderborn (DE); Roll, Michael, 32049 Herford (DE); Mollemeier, Elmar, 33129 Delbrück (DE)
(74) Vertreter: Ksoll, Peter

(56) Entgegenhaltungen:
- DE-A1-102007 024 882
- DE-A1-102010 019 551
- DE-U1-202007 018 727
- FR-A1- 2 869 263
- JP-A- 2003 002 136

## Beschreibung

Die vorliegende Erfindung betrifft eine Stoßfängeranordnung für ein Kraftfahrzeug gemäß den Merkmalen im Oberbegriff von Patentanspruch z

Stoßfängersysteme werden bei Kraftfahrzeugen eingesetzt, um bei Auffahrunfällen oder aber Unfällen geringer Intensität die Reparaturkosten für die Kraftfahrzeugkarosserie gering zu halten und bei Aufprallen hoher Intensität möglichst viel Crashenergie abzubauen, so dass die Insassen des Kraftfahrzeuges einem geringen Verletzungsrisiko ausgesetzt werden.

Solche Stoßfängersysteme sind im Fahrzeugbau vordergründig an die geforderten Crasheigenschaften anzupassen. Sie unterliegen jedoch zwei weiteren wesentlichen Anforderungsaspekten, zum einen den Anforderungen an das Design des Fahrzeuges, weshalb sie sich in den durch das Design zur Verfügung stehenden Bauraum einzugliedern haben, zum anderen gilt aktuell bei allen im Kraftfahrzeugbereich eingesetzten Komponenten die Maßgabe, Leichtbauweisen konsequent umzusetzen, so dass sich ein geringes Fahrzeuggesamtgewicht und somit ein geringer Verbrauch und gleichzeitig geringer CO₂-Austoß ergibt.

Im Falle eines Unfalles ist es unter Umständen möglich, dass das Fahrzeug anschließend nicht mehr eigenständig fahrfähig ist. Ebenfalls kann ein solcher Zustand bei Kraftstoffmangel oder aber einem Ausfall der Bordelektronik eintreten, weshalb ein Kraftfahrzeug abschleppbar sein muss. Auch hier werden zugunsten von optischen Designaspekten und günstigen Strömungsbeiwerten Abschleppvorrichtungen verdeckt an Kraftfahrzeugen angeordnet oder aber lösbar mit den Kraftfahrzeugen gekoppelt. So sind beispielsweise einschraubbare Abschleppösen Stand der Technik, die im Falle einer Fahrunfähigkeit des Fahrzeuges durch entsprechende Öffnungen, zumeist in Front- oder Heckschürze, mit dem Kraftfahrzeug verschraubt werden. Aufgrund der hohen auftretenden Kräfte beim Abschleppen von bis zu mehreren Tausend Newton bestehen einschraubbare Abschleppösen zumeist aus einem Stahlwerkstoff. Diese Abschleppösen werden meist direkt mit Kraftfahrzeugstrukturbauteilen, also direkt mit der tragenden Karosserie, verbunden, so dass durch das Abschleppen selber die hohen Kräfte auf das Fahrzeug übertragen werden können und kein weiterer Schaden, beispielsweise durch Verzug, an dem Fahrzeug angerichtet wird.

Ebenfalls müssen Abschleppösen separate Aufgaben erfüllen, beispielsweise die Aufnahme von Anbauteilen oder aber ein Verzurren eines Fahrzeuges, beispielsweise bei einem Transport auf einem Abschleppwagen oder einer Fähre. Auch unterliegen Abschleppösen, insbesondere im Nutzfahrzeug oder aber Geländefahrzeug oder Militärfahrzeugbereich, den Anforderungen von Verladbarkeit, also das Anheben eines Kraftfahrzeuges mittels Kran.

Heutige Fahrzeuge werden meistens mit komplexen Crashmanagementsystemen ausgerüstet. Hierunter ist ein Aufbau von Querträger, Crashboxen, Fußgängerschutz, Precrash-Sensorik und Designanbauteilen zu verstehen, welche einen direkten Zugriff front- und/oder heckseitig auf die dahinter liegenden Fahrzeugstrukturbauteile verhindert. Für die Crashmanagementsysteme werden also ausschließlich Leichtbauwerkstoffe, wie z. B. Leichtmetalle, Faserverbundwerkstoffe, Kunststoffe oder Schaumwerkstoffe, eingesetzt.

Da Abschleppösen über die Lebensdauer eines Kraftfahrzeuges nach hoher Wahrscheinlichkeit nie zum Einsatz kommen, gleichsam aber immer bei Gebrauch einen sicheren Einsatz erfüllen müssen, werden diese meist aus Kostenaspekten aus einfachen Stahl-Einschraubösen hergestellt. Die Koppelung von solchen Abschleppösen mit modernen Crashmanagementsystemen steht folglich in einem Zielkonflikt, da die Crashperformance des Crashmanagementsystems nicht verringert werden darf und gleichzeitig die Aufnahmemöglichkeit einer Öse weder die Crashperformance des Crashmanagementsystems herabsetzen darf noch sich nachteilig auf Designanforderung des Kraftfahrzeuges auswirken darf. Darüber hinaus ist eine sehr günstige Produzierbarkeit einer Anbindung einer Abschleppöse an ein Crashmanagementsystem oder aber an ein Kraftfahrzeug zwingende Voraussetzung.

Aus der EP 1 721 786 A2 ist beispielsweise ein Stoßfängersystem bekannt, welches aus einem Querträger und zwei Crashboxen besteht, wobei in einer Crashbox ein Verbindungselement angeordnet wird. Das Verbindungselement besteht dabei aus einem Profilelement, welches in den Hohlraum der Crashbox eingesetzt wird und dort formschlüssig, kraftschlüssig und/oder stoffschlüssig gekoppelt wird.

Die DE 10 2007 024 882 A1 offenbart eine Crashbox, wobei innerhalb der Crashbox ein Halter oder aber zwei Halterungen eingesetzt sind. Die Halterungen werden dann mit der Crashbox über Clinchverbindungen gekoppelt, wobei innerhalb der Halterung eine Gewindestange zur Koppelung mit einer Abschleppöse vorgesehen ist.

Die gattungsgemäße JP 2003 002 136 A offenbart eine Stoßfängeranordnung aufweisend eine Crashbox, wobei zwischen der Crashbox und einem Längsträger eine Flanschplatte eingegliedert ist und an der Flanschplatte ein Loch ausgebildet ist, welches eine Gewindestange aufnimmt und am Ende der Gewindestange mit einer Mutter in Zugrichtung der Abschleppöse gekontert ist.

Ferner sind aus der DE 10 2010 019 551 A1. der DE 20 2007 018 727 U1 sowie der FR 2 869 263 A1 Crashboxen bekannt, in die eine Gewindehülse zur Aufnahme einer Abschleppöse eingegliedert ist.

Aufgabe der vorliegenden Aufgabe ist es, ausgehend vom Stand der Technik eine Stoßfängeranordnung bereitzustellen, die eine hohe Crashperformance aufweist, besonders günstig produzierbar ist und gleichzeitig eine Aufnahmemöglichkeit für eine Abschleppöse bietet, welche eine einfache und leichte Montage der Abschleppöse ermöglicht, ohne die Crasheigenschaften der Stoßfängeranordnung zu beeinflussen.

Die zuvor genannte Aufgabe wird mit einer Stoßfängeranordnung für ein Kraftfahrzeug gemäß den Merkmalen im Patentanspruch 1 gelöst.

Vorteilhafte Ausführungsvarianten der vorliegenden Erfindung sind Bestandteil der abhängigen Patentansprüche.

Die erfindungsgemäße Stoßfängeranordnung für ein Kraftfahrzeug weist einen Querträger auf, wobei an dem Querträger Crashboxen gekoppelt sind. Die Crashboxen werden wiederum an einem Kraftfahrzeug, vorzugsweise hier an einen Längsträger, gekoppelt. Weiterhin weist die erfindungsgemäße Stoßfängeranordnung eine Aufnahme für eine lösbare, koppelbare Abschleppvorrichtung auf. Erfindungsgemäß ist die Aufnahme der Stoßfängeranordnung derart ausgebildet, dass sie eine Flanschplatte und ein Lochelement zur Aufnahme der Abschleppvorrichtung aufweist, wobei die Flanschplatte an einer Crashbox koppelbar ist und zwischen einer Crashbox und einem Längsträger des Kraftfahrzeugs eingliederbar ist und dass das Lochelement eine Gewindehülse ist, wobei die Gewindehülse mit der Flanschplatte stoffschlüssig gekoppelt ist und das Lochelement in einem Hohlraum der Crashbox angeordnet ist.

Ein wesentlicher Vorteil der vorliegenden Erfindung ist, dass die Aufnahme vorzugsweise komplett aus Stahlwerkstoff besteht. Die Einzelteile der Aufnahme sind besonders bevorzugt stoffschlüssig gekoppelt, insbesondere durch ein Schweißverfahren. Die gesamte Baueinheit kann dadurch korrosionsschutzbehandelt werden, was wiederum sicherstellt, dass die Einsatzbereitschaft ein Fahrzeugleben lang sichergestellt ist. Insbesondere werden erfindungsgemäß somit die Problemstellung, dass eine Stahlabschleppöse ebenfalls ein Gegengewinde aus Stahl benötigt, sowie die hohen, auf einer Abschleppvorrichtung wirkenden Kräfte kompensiert.

Der Stahlwerkstoff, insbesondere die Flanschplatte aus Stahlwerkstoff, widersteht erfindungsgemäß hohen Zugdruckbelastungen. Ebenfalls wird durch den modularen Aufbau, nämlich der Koppelung mit der Crashbox, eine Anbindung der Aufnahme über Schweißnähte vermieden, weshalb kein Versagen solcher im Crashfall zu verzeichnen ist. Die erfindungsgemäße Aufnahme ermöglicht weiterhin eine modulare Koppelung zu allen erdenklichen Crashmanagementsystemen, die in moderne Kraftfahrzeuge und Nutzfahrzeuge eingebaut werden, ohne deren Funktion zu beeinträchtigen.

Insbesondere ist im Rahmen der Erfindung die Flanschplatte zwischen der Crashbox und dem Kraftfahrzeug eingliederbar, vorzugsweise zwischen dem Crashbox und einem Längsträger des Fahrzeuges. Hierdurch wird ebenfalls sichergestellt, dass das Crashmanagementsystems des Kraftfahrzeuges baulich nicht beeinträchtigt und in der Crashperformance auch nicht beeinflusst wird. Gleichzeitig ist eine hohe Widerstandsfähigkeit des Gesamtsystems, insbesondere der Abschleppvorrichtung, gegen Zug-/Druckbelastung in Folge von Abschlepp-, Zieh- oder Druckkräften gegeben.

Weiterhin ermöglicht die Eingliederung somit eine Koppelung zwischen Crashbox und Kraftfahrzeug, insbesondere Längsträger, einen direkten Kontakt zu den Kraftfahrzeugstrukturbauteilen der selbsttragenden Karosserie, insbesondere eine direkte Anbindung an die Rohkarosserie und gleichzeitig die Wahl von verschiedenen Materialien, so dass das Crashmanagementsystem aus Leichtbauwerkstoffen ausgebildet sein kann, wohingegen die Aufnahme für die Abschleppvorrichtung aus festem, insbesondere hochfestem, Stahlwerkstoff eingebaut werden kann. Auch ist eine erfindungsgemäße Anordnung ohne weiteren Aufwand an Kraftfahrzeuge koppelbar, welche komplett aus Leichtbauwerkstoffen, beispielsweise Aluminium, bestehen.

Für eine leichte Erstmontage oder aber auch eine leichte Unfallreparatur ist gemäß vorliegender Erfindung vorzugsweise die Flanschplatte formschlüssig zwischen Crashbox und Längsträger über Bolzen gekoppelt, besonders bevorzugt über Befestigungsbolzen der Stoßfängeranordnung. Somit kann die gesamte Kraftfahrzeugstoßfängeranordnung bei der Erstmontage inklusive der Aufnahme als Baueinheit bereitgestellt werden und dann an den Vorderwagen bzw. Heckwagen des Kraftfahrzeugs gekoppelt werden. Insbesondere ist hierbei von Vorteil, dass die Aufnahme die bereits vorhandenen Bolzen nutzt und somit keinen Mehraufwand für weitere Teile oder die Koppelung mit dem Kraftfahrzeug benötigt. Ein weiterer Vorteil ist, dass der Montageaufwand, insbesondere bei der Erstmontage, gering ausfällt, da bereits vormontierte Aufnahmen, bestehend aus mindestens Flanschplatte und Lochelement, in den Montageprozess integrierbar sind.

Besonders bevorzugt ist das Lochelement als Hohlprofil ausgebildet, welches mittelbar oder unmittelbar mit der Flanschplatte gekoppelt ist. Besonders bevorzugt handelt sich bei dem Hohlprofil um eine Gewindehülse. In einfacher Bauweise handelt es sich somit um ein Rohrprofil, welches mit einem Innengewinde ausgestattet ist. Hierzu muss für das Lochelement nur ein geringer Material- und Fertigungsaufwand aufgebracht werden, bei gleichzeitiger Erfüllung der Anforderung von einfacher Handhabbarkeit und steter Einsatzbereitschaft.

Besonders bevorzugt handelt sich dabei um einen Stahlwerkstoff, welcher mindestens 1 mm Wandstärke, bevorzugt 1,5 mm Wandstärke und besonders bevorzugt mehr als 2 mm Wandstärke aufweist. Im Rahmen der Erfindung sind das Lochelement und die Flanschplatte insbesondere über eine stoffschlüssige Koppelung miteinander verbunden. Hierbei handelt es sich besonders bevorzugt um eine Schweißnaht, welche punktuell oder aber fließend zwischen Flanschplatte und Hohlprofil aufgebracht ist.

In einer weiteren bevorzugten , Ausführungsvariante weist die Aufnahme ein zusätzliches Stützelement auf, wobei das Stützelement das Lochelement mittelbar oder unmittelbar mit der Flanschplatte verbindet. Das Stützelement sorgt zusätzlich dafür, dass das Lochelement gegenüber Kräften, die nicht rein in Kraftfahrzeug X-Richtung gerichtet sind und aus Zug oder Druck, beispielsweise beim Abschleppen bestehen, gestützt wird. Beispielsweise sind hier schräg auftretende Kräfte als Kombination aus Kraftfahrzeug X-, Y- und Z-Richtung zu nennen. Diese können beispielsweise auftreten beim Verzurren eines Kraftfahrzeuges auf einem Abschleppwagen, wonach maßgeblich noch Kräfte in Kraftfahrzeug Z-Richtung auftreten. Ebenso ist es möglich, in die Aufnahme andere Anbindungskomponenten, beispielsweise einen Fahrradträger oder ähnliches, einzustecken. Auch hier treten Kräfte auf, die in Kraftfahrzeug Y- oder aber auch in Kraftfahrzeug Z-Richtung gerichtet sind. Das Stützelement stellt sicher, dass auch bei auftretenden Kräften die Position des Lochelementes stets gehalten wird.

Besonders bevorzugt ist das Stützelement als umgeformtes Blechbauteil ausgebildet. Weiterhin bevorzugt weist das Blechbauteil Abstützflansche auf, wobei die Abstützflansche an der Flanschplatte zur Anlage kommen. Hier erfolgt nach dem Prinzip des Fachwerkbaus oder aber des verbindungssteifen Dreieckes eine Versteifung, die wahlweise je nach dem in Kraftfahrzeug Y- und Kraftfahrzeug Z-Richtung gleichsam oder insbesondere in eine der zuvor genannten Richtungen verstärkt ausgebildet sein kann. Das Blechbauteil bzw. die Abstützflansche sind wiederum besonders bevorzugt stoffschlüssig mit der Flanschplatte und/oder dem Lochelement gekoppelt. Die Abstützflansche können jedoch auch formschlüssig mit der Flanschplatte zum Eingriff kommen. Ebenso kann hier mit einem Prinzip von Einstecklasche und Einstecktasche oder aber Nut und Feder gearbeitet werden, wodurch ein zusätzlicher Schweißprozess entfallen würde.

Insbesondere weist das Stützelement weiterhin eine Öffnung auf, wobei das Lochelement das Stützelement in der Öffnung durchgreift. Hierdurch wird ein sicherer Sitz des Stützelementes im Bereich des Lochelementes sichergestellt und es können beispielsweise zusätzliche Schweißpunkte oder ähnliches entfallen, da bereits eine formschlüssige Koppelung zwischen Lochelement und Stützelemente gegeben ist.

Das Lochelement ist in einem Hohlraum der Crashbox angeordnet. Hierunter ist maßgeblich zu verstehen, dass in Längsrichtung des Lochelementes, welche im Wesentlichen in Kraftfahrzeug X-Richtung orientiert ist, eine Anordnung zumindest abschnittsweise in dem Hohlraum der Crashbox vorliegt. Das Lochelement wird somit von der Flanschplatte, welche vorzugsweise am Vorderfahrzeug in Fahrtrichtung hinter der Crashbox und am Heck des Fahrzeuges in Fahrtrichtung vor der Crashbox angeordnet ist, in dem Hohlraum positioniert gehalten.

Im Falle eines Fahrzeugcrashes hoher Intensität wird das Energieabsorptionsvermögen, vorrangig durch das Faltverhalten der Crashbox, durch das Lochelement somit nicht beeinflusst. Gleichzeitig wird der in der Crashbox selber zur Verfügung stehende Raum, welcher üblicherweise nicht genutzt wird, zur Unterbringung der Aufnahme für eine Abschleppvorrichtung genutzt. Gerade unter dem Aspekt von aktuellen Fußgängerschutzanforderungen verbleibt somit der restliche Bauraum im Bereich des Crashmanagementsystems zur Auspolsterung mit weichen Werkstoffen. Bevorzugt kann frontseitig oder heckseitig durch die Frontschürze oder Heckschürze greifend direkt auf den Hohlraum in der Crashbox zugegriffen werden und somit auf das Lochelement oder aber durch eine Öffnung im Querträger. Insbesondere ist die Aufnahme aus einer metallischen Legierung ausgebildet, vorzugsweise aus Stahl, insbesondere aus vergütetem Stahl. Ein Stahlwerkstoff bietet hier die geforderten Festigkeitseigenschaften bei gleichzeitigen günstigen Materialkosten, leichter und kostengünstiger Verarbeitungsmöglichkeit und entsprechenden Langlebigkeitsaspekten. Das gesamte Bauteil kann durch Korrosionsschutzmaßnahmen kostengünstig und langlebig produziert werden. Beispielsweise ist hier eine Feuerverzinkung oder aber ein KTL-Verfahren möglich. Im Rahmen der Erfindung ist es jedoch auch möglich, die einzelnen Bauteile der Aufnahme oder aber die gesamte Aufnahme aus einem Leichtmetall zu fertigen. Dies ist abhängig von den Abmessungen und Dimensionierungen des Kraftfahrzeuges und den daraus resultierenden Anforderungen an die Abschleppvorrichtung.

In einer weiteren vorteilhaften Ausführungsvariante der vorliegenden Erfindung sind in der Flanschplatte Versteifungssicken ausgebildet. Diese Versteifungssicken können insbesondere durch Umformverfahren in der Flanschplatte ausgebildet sein. Hierdurch wird ein Verbiegen der Flanschplatte weitestgehend vermieden. Die Versteifungssicken können jedoch auch formschlüssige Begrenzungen zur Aufnahme einer Crashbox darstellen. Ebenso können die Versteifungssicken im Bereich der Öffnungen zur Durchführungen von Bolzen zur Koppelung an einem Kraftfahrzeug oder zur Eingliederung zwischen Crashbox- und Kraftfahrzeuglängsträger ausgebildet sein, um hier ein erhöhtes Widerstandsmoment gegen Biegung zu gewährleisten. Im Rahmen der Erfindung kann die Flanschplatte auch Ausnehmungen bzw. Bohrungen aufweisen, um somit das Eigengewicht und den Materialeinsatz zu reduzieren, ohne sich wesentlich auf die Festigkeitseigenschaften auszuwirken.

Besonders bevorzugt weist die Flanschplatte eine Öffnung auf, wobei das Lochelement die Flanschplatte in der Öffnung durchgreift und besonders bevorzugt über einen Kragen formschlüssig gegen Herausziehen gesichert ist. Vorzugsweise ist der Kragen an dem Lochelement so ausgebildet, dass ein Einführen des Lochelementes in die Öffnung ermöglicht wird, es jedoch dann zwischen dem Lochelement und der Flanschplatte zu einem Formschluss kommt. Ein Vorteil hierdurch ist, dass beispielsweise durch Punktschweißung ein fester formschlüssiger Sitz der Bauteile der Aufnahme sichergestellt ist, bei gleichzeitig einfachster Produzierbarkeit. Ebenfalls kann das System so als modulares Baukastensystem genutzt werden, wonach beispielsweise verschiedene Lochelemente für die einzelnen Kontinentalmärkte eingesetzt werden können. Beispielsweise können so im US-amerikanischen Markt andere Abschleppösen verwendet werden gegenüber einem europäischen Markt, bei gleichbleibender Flanschplatte.

In einer weiteren bevorzugten Ausführungsvariante der vorliegenden Erfindung kann das Lochelement selbst auch verkürzt ausgebildet sein. Hierzu wird das Lochelement vorderseitig an dem Stützelement angeordnet und/oder mit diesem gekoppelt. Das Lochelement kann dabei die Vorderseite des Stützelementes analog der Ausführungsvariante mit dem Kragen ebenfalls durchgreifen, wobei der Kragen nicht an der Flanschplatte, sondern in diesem Fall an dem Stützelement zur Anlage kommt. Das Lochelement kann jedoch im Rahmen der Erfindung auch vorderseitig auf das Stützelement aufgeschweißt bzw. angeschweißt sein. Als Vorteil hierzu ist ein deutlich kürzeres Lochelement zu sehen, bei gleicher Erreichbarkeit von außen. In Abhängigkeit der zu erwartenden Kräfte, insbesondere in Y- und Z-Richtung des Kraftfahrzeugkoordinatensystems, ist diese Ausführungsvariante sinnvoll zu wählen.

Im Rahmen der Erfindung ist es insbesondere möglich, mit einem Querträger und Crashboxen, die aus Leichtmetall hergestellt sind, insbesondere aus einer Aluminiumlegierung, durch die erfindungsgemäße Aufnahme eine hinreichend hohe Steifigkeit zum Abschleppen eines havarierten Kraftfahrzeuges zu erreichen.

Insbesondere die Aufnahme, ganz besonders bevorzugt die Gewindehülse und/oder die Flanschplatte, ist aus einem Stahlwerkstoff hergestellt, so dass hier ein eingeschraubter Abschlepphaken mit entsprechend hoher Festigkeit gehalten wird.

Im Rahmen der Erfindung ist jedoch auch möglich, dass nicht nur der Querträger und die Crashboxen aus einer Leichtmetalllegierung hergestellt sind, sondern auch die Aufnahme selber aus einem Leichtmetall ausgebildet ist.

Im Rahmen der Erfindung ist weiterhin vorstellbar, nur die Flanschplatte aus Leichtmetall herzustellen und die Gewindehülse selbst wiederum aus einem Stahlwerkstoff auszubilden.

Weitere Vorteile, Merkmale, Eigenschaften und Aspekte der vorliegenden Erfindung sind Bestandteil der folgenden Beschreibung. Die schematischen Figuren zeigen bevorzugte Ausführungsvarianten, die dem einfachen Verständnis der Erfindung dienen. Es zeigen:
- Figur 1: eine erfindungsgemäße Aufnahme für eine Abschleppvorrichtung,
- Figur 2: die erfindungsgemäße Aufnahme mit Stützelement,
- Figur 3: die erfindungsgemäße Aufnahme mit Crashbox,
- Figur 4: die Ansicht gemäß Figur 3 in einer Seitenansicht und
- Figur 5: eine erfindungsgemäße Stoßfängeranordnung.

In den Figuren werden für gleiche oder ähnliche Bauteile dieselben Bezugszeichen verwendet, auch wenn eine wiederholte Beschreibung aus Vereinfachungsgründen entfällt.

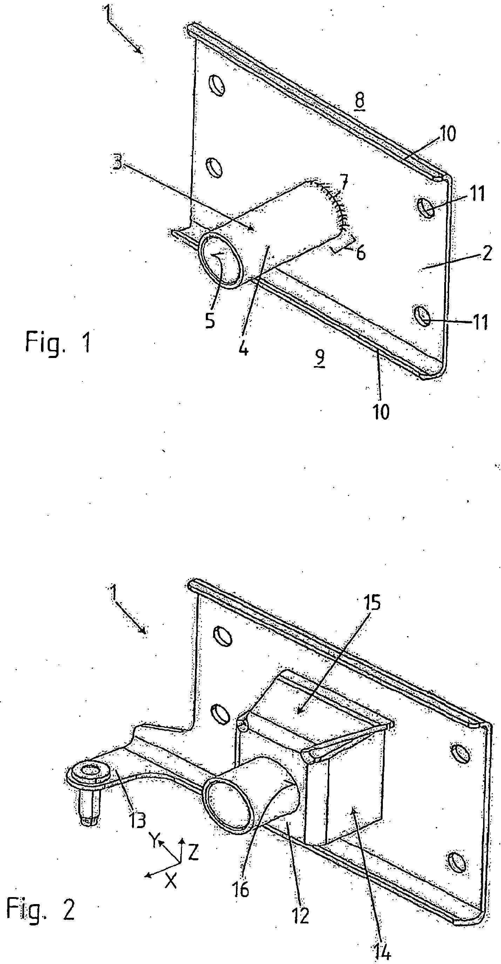

Figur 1 zeigt eine erfindungsgemäße Aufnahme 1 zur Eingliederung in eine hier nicht näher gezeigte Stoßfängeranordnung. Die Aufnahme 1 besteht dabei aus einer Flanschplatte 2 und einem Lochelement 3. Das Lochelement 3 ist als Gewindehülse 4 ausgebildet, wobei sich in dem Lochelement 3 ein Innengewinde 5 befindet. Die Gewindehülse 4 ist in einem Fußbereich 6 mit der Flanschplatte 2 gekoppelt. Diese Koppelung erfolgt beispielsweise über eine hier dargestellte Schweißnaht 7. Die Flanschplatte 2 selber weist an einer Oberseite 8 und einer Unterseite 9 jeweils eine Versteifungssicke 10 auf. Die Versteifungssicken 10 dienen gleichzeitig der formschlüssigen Koppelungsmöglichkeit einer hier nicht näher dargestellten Crashbox. In der Flanschplatte 2 sind weiterhin Montageöffnungen 11 vorhanden, mit denen die Flanschplatte 2 und somit die gesamte Aufnahme 1 zwischen einer Crashbox und einem Kraftfahrzeug eingliederbar ist.

Figur 2 zeigt die Aufnahme gemäß Figur 1, wobei hier zusätzlich ein Stützelement 12 sowie eine Aufnahmelasche 13 dargestellt sind. Die Aufnahmelasche 13 dient der Aufnahme 1 von hier nicht näher dargestellten Komponenten eines Crashmanagementsystems oder aber zusätzlichen Bauteilen sowie beispielsweise einem Abgasschalldämpfer oder aber einem Infrarotsensor oder ähnlichen Bauteilen. Das Stützelement 12 selbst weist Abstützflansche 14, 15 auf, wobei hier drei Abstützflansche 14, 15 sichtbar sind. Die seitlichen Abstützflansche 14 sind dabei gerade ausgeformt und kommen an der Flanschplatte 2 zur Anlage. Diese können beispielsweise auch über eine hier nicht näher dargestellte Schweißnaht mit der Flanschplatte 2 gekoppelt sein. Der obere Abstützflansch 15 verläuft zur Flanschplatte 2 hingerichtet breiter werdend. Das korrespondierte eingezeichnete Kraftfahrzeugkoordinatensystem zeigt, dass hier nicht nur Kräfte in Kraftfahrzeug X-Richtung, sondern auch in Kraftfahrzeug Y-Richtung besser aufgefangen werden.

Weiterhin weist das Stützelement 12 eine Öffnung 16 auf, wobei das Lochelement 3 das Stützelement 12 in der Öffnung 16 durchgreift.

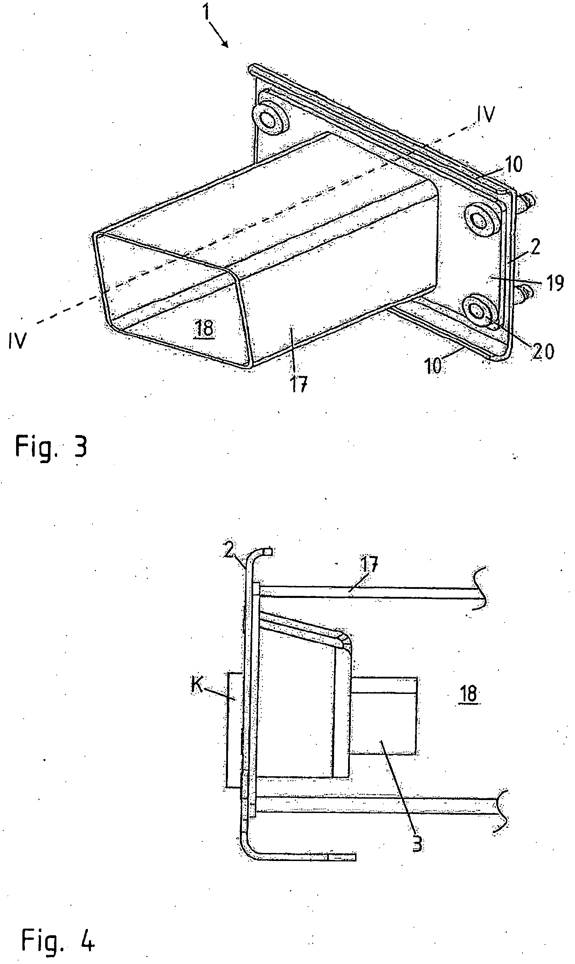

Figur 3 zeigt die erfindungsgemäße Aufnahme mit einer aufgesetzten Crashbox 17. Die Aufnahme 1 selbst ist hier nicht näher dargestellt, ist jedoch abschnittsweise in einem Innenraum 18 der Crashbox 17 integriert. Die Crashbox 17 weist weiterhin eine Crashboxflanschplatte 19 auf, wobei die Crashboxflanschplatte 19 mit der Flanschplatte 2 der Aufnahme 1 über Bolzen 20 gekoppelt ist. Die Crashbox 17 selbst stützt sich somit an der Crashboxflanschplatte 19 und an der Flanschplatte 2 der Aufnahme 1 ab. Ebenfalls wirken sich hier die Versteifungssicken 10 positiv auf ein verstärktes Widerstandsmoment gegen Biegung der beiden Flanschplatten 2 aus.

Figur 4 zeigt eine seitliche Querschnittsansicht von Figur 3 gemäß Schnittlinie IV-V. Hier ist zu erkennen, dass das Lochelement 3 mit Stützelement 12 in dem Innenraum 18 der Crashbox 17 angeordnet ist. Aufgrund der geringen Länge des Lochelementes 3 gegenüber der Crashbox 17 wird die Falteigenschaft der Crashbox 17 nicht beeinflusst. Weiterhin ist ein Kragen K an dem Lochelement 3 ausgebildet, der formschlüssig mit der Flanschplatte 2 gekoppelt ist.

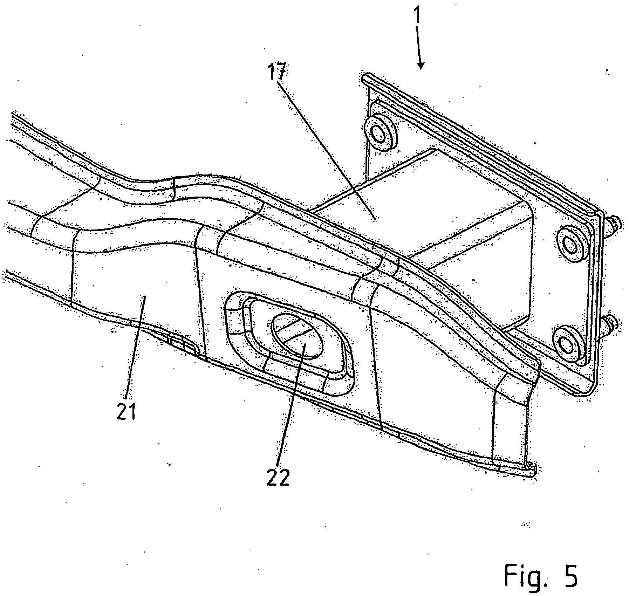

Figur 5 zeigt eine erfindungsgemäße Stoßfängeranordnung mit einem Querträger 21, einer Crashbox 17 und einer Aufnahme 1. Der Querträger 21 weist eine Montageöffnung 22 auf, durch die eine hier nicht näher dargestellte Abschleppöse in die Aufnahme 1 einsteck- und einschraubbar ist.

### Bezugszeichen:

- 1 -: Aufnahme
- 2 -: Flanschplatte
- 3 -: Lochelement
- 4 -: Gewindehülse
- 5 -: Innengewinde
- 6 -: Fußbereich
- 7 -: Schweißnaht
- 8 -: Oberseite
- 9 -: Unterseite
- 10 -: Versteifungssicke
- 11 -: Montageöffnung
- 12 -: Stützelement
- 13 -: Aufnahmelasche
- 14 -: seitlicher Abstützflansch
- 15 -: oberer Abstützflansch
- 16 -: Öffnung
- 17 -: Crashbox
- 18 -: Innenraum
- 19 -: Crashboxflanschplatte
- 20 -: Bolzen
- 21 -: Querträger
- 22 -: Montageöffnung

- K -: Kragen

## Patentansprüche

1. Stoßfängeranordnung für ein Kraftfahrzeug, aufweisend einen Querträger (21), wobei an den Querträger (21) Crashboxen (17) gekoppelt sind, und die Stoßfängeranordnung weiterhin eine Aufnahme (1) für eine lösbar koppelbare Abschleppvorrichtung aufweist und die Aufnahme (1) eine Flanschplatte (2) und ein Lochelement (3) zur Aufnahme der Abschleppvorrichtung aufweist, wobei die Flanschplatte (2) an einer Crashbox (17) koppelbar ist und zwischen einer Crashbox (17) und einem Längsträger des Kraftfahrzeuges eingegliedert ist und das Lochelement (3) in einem Hohlraum (18) der Crashbox (17) angeordnet ist, **dadurch gekennzeichnet, dass** das Lochelement (3) eine Gewindehülse (4) ist, wobei die Gewindehülse (4) mit der Flanschplatte (2) stoffschlüssig gekoppelt ist.

2. Stoßfängeranordnung nach Anspruch 1, **dadurch gekennzeichnet, dass** die Flanschplatte (2) über Befestigungsbolzen der Stoßfängeranordnung formschlüssig zwischen Crashbox (17) und Längsträger gekoppelt ist.

3. Stoßfängeranordnung nach einem der Ansprüche 1 bis 2, **dadurch gekennzeichnet, dass** die Aufnahme (1) ein zusätzliches Stützelement (12) aufweist, wobei das Stützelement (12) das Lochelement (3) mittelbar oder unmittelbar mit der Flanschplatte (2) verbindet.

4. Stoßfängeranordnung nach Anspruch 3, **dadurch gekennzeichnet, dass** das Stützelement (12) ein umgeformtes Blechbauteil ist, vorzugsweise weist das Blechbauteil Abstützflansche auf, wobei die Abstützflansche an der Flanschplatte (2) zur Anlage kommen.

5. Stoßfängeranordnung nach Anspruch 3 oder 4, **dadurch gekennzeichnet, dass** das Stützelement (12) eine Öffnung (16) aufweist, wobei das Lochelement (3) das Stützelement (12) in der Öffnung (16) durchgreift.

6. Stoßfängeranordnung nach einem der Ansprüche 1 bis 5, **dadurch gekennzeichnet, dass** die Aufnahme (1) aus einer metallischen Legierung ausgebildet ist, vorzugsweise aus Stahl, insbesondere aus vergütetem Stahl, ganz besonders bevorzugt aus gehärtetem Stahl.

7. Stoßfängeranordnung nach einem der Ansprüche 1 bis 6, **dadurch gekennzeichnet, dass** die Flanschplatte (2) Versteifungssicken (10) aufweist.

8. Stoßfängeranordnung nach einem der Ansprüche 1 bis 7, **dadurch gekennzeichnet, dass** die Flanschplatte (2) eine Öffnung aufweist, wobei das Lochelement (3) die Flanschplatte (2) in der Öffnung durchgreift und über einen Kragen (K) formschlüssig gegen Herausziehen koppelt.

9. Stoßfängeranordnung nach einem der Ansprüche 1 bis 8, **dadurch gekennzeichnet, dass** der Querträger (21) und die Crashboxen (17) aus Leichtmetall, insbesondere aus einem Aluminiumwerkstoff, ausgebildet sind.

## Claims

1. A bumper arrangement for a motor vehicle, having a cross beam (21), wherein crash boxes (17) are coupled to the cross beam (21), and the bumper arrangement also has an attachment (1) for a detachable coupleable towing device and the attachment (1) has a flange plate (2) and a hole element (3) for the attachment of the towing device, wherein the flange plate (2) can be coupled to a crash box (17) and is incorporated between a crash box (17) and a longitudinal beam of the motor vehicle and the hole element (3) is arranged in a cavity (18) of the crash box (17), **characterized in that** the hole element (3) is a threaded sleeve (4), wherein the threaded sleeve (4) is coupled firmly bonded with the flange plate (2).

2. A bumper arrangement according to claim 1, **characterized in that** the flange plate (2) is coupled positively via mounting bolts to the bumper arrangement between the crash box (17) and the longitudinal beam.

3. A bumper arrangement according to one of claims 1 to 2, **characterized in that** the attachment (1) has an additional supporting element (12), wherein the supporting element (12) connects the hole element (3) indirectly or directly to the flange plate (2).

4. A bumper arrangement according to claim 3, **characterized in that** the supporting element (12) is a transformed sheet metal part, preferably the sheet metal part has supporting flanges, wherein the supporting flanges come into contact with the flange plate (2).

5. A bumper arrangement according to claim 3 or 4, **characterized in that** the supporting element (12) has an opening (16), wherein the hole element (3) reaches through the supporting element (12) in the opening (16).

6. A bumper arrangement according to claims 1 to 5, **characterized in that** the attachment (1) is designed from a metallic alloy, preferably from steel, in particular from quenched and tempered steel, exceptionally preferred from hardened steel.

7. A bumper arrangement according to one of claims 1 to 6, **characterized in that** the flange plate (2) has stiffening corrugations (10).

8. A bumper arrangement according to one of claims 1 to 7, **characterized in that** the flange plate (2) has an opening, wherein the hole element (3) reaches through the flange plate (2) in the opening and couples positively via a collar (K) against extraction.

9. A bumper arrangement according to one of claims 1 to 8, **characterized in that** the cross beam (21) and the crash boxes (17) are designed from light metal, in particular from an aluminum material.

## Revendications

1. Agencement de pare-chocs pour un véhicule automobile, comportant une traverse (21), des boîtes-tampons (17) étant couplées à la traverse (21), l'agencement de pare-chocs comportant en outre un logement (1) pour un dispositif de remorquage qui peut être couplé de manière amovible, le logement (1) comportant une plaque de flanc (2) et un élément creux (3) destiné à recevoir le dispositif de remorquage, la plaque de flanc (2) pouvant être couplée à une boîte-tampon (17) et étant intégrée entre une boîte-tampon (17) et un longeron du véhicule automobile et l'élément creux (3) étant agencé dans un espace creux (18) de la boîte-tampon (17), **caractérisé en ce que** l'élément creux (3) est une douille taraudée (4), la douille taraudée (4) étant couplée par liaison de matière à la plaque de flanc (2).

2. Agencement de pare-chocs selon la revendication 1, **caractérisé en ce que** la plaque de flanc (2) est couplée par concordance de forme entre la boîte-tampon (17) et le longeron par l'intermédiaire de boulons de fixation de l'agencement de pare-chocs.

3. Agencement de pare-chocs selon l'une des revendications 1 à 2, **caractérisé en ce que** le logement (1) comporte un élément de soutien (12) supplémentaire, l'élément de soutien (12) reliant l'élément creux (3) directement ou indirectement à la plaque de flanc (2).

4. Agencement de pare-chocs selon la revendication 3, **caractérisé en ce que** l'élément de soutien (12) est une pièce en tôle formée et **en ce que** la pièce en tôle comporte de préférence des flancs de soutien, les flancs de soutien venant s'appuyer contre la plaque de flanc (2).

5. Agencement de pare-chocs selon la revendication 3 ou 4, **caractérisé en ce que** l'élément de soutien (12) comporte une ouverture (16), l'élément creux (3) pénétrant dans l'élément de soutien (12) par l'ouverture (16).

6. Agencement de pare-chocs selon l'une des revendications 1 à 5, **caractérisé en ce que** le logement (1) est conçu en un alliage métallique, de préférence en acier, notamment en acier traité, et tout particulièrement de préférence en acier trempé.

7. Agencement de pare-chocs selon l'une des revendications 1 à 6, **caractérisé en ce que** la plaque de flanc (2) comporte des moulures de renfort (10).

8. Agencement de pare-chocs selon l'une des revendications 1 à 7, **caractérisé en ce que** la plaque de flanc (2) comporte une ouverture, l'élément creux (3) pénétrant dans la plaque de flanc (2) par l'ouverture et étant couplé à celle-ci par concordance de forme par l'intermédiaire d'un collet (K) pour éviter tout retrait.

9. Agencement de pare-chocs selon l'une des revendications 1 à 8, **caractérisé en ce que** la traverse (21) et les boîtes-tampons (17) sont conçues en métal léger, notamment en un matériau à base d'aluminium.
